Europäisches Patentamt

European Patent Office

Office européen des brevets

(11) Veröffentlichungsnummer: **0 351 723**
**A2**

## (12) EUROPÄISCHE PATENTANMELDUNG

(21) Anmeldenummer: 89112917.3

(22) Anmeldetag: 14.07.89

(51) Int. Cl.⁴: **F16F 1/14 , F16C 3/02 ,**
**B29C 47/02 , B29C 63/14**

(30) Priorität: 22.07.88 DE 3824933

(43) Veröffentlichungstag der Anmeldung:
24.01.90 Patentblatt 90/04

(84) Benannte Vertragsstaaten:
DE ES FR GB IT

(71) Anmelder: **AUDI AG**
**Auto-Union-Strasse 1 Postfach 220**
**D-8070 Ingolstadt(DE)**

(72) Erfinder: **Schäper, Siegfried, Dr.**
**Am Fort 5**
**D-8071 Wettstetten(DE)**
Erfinder: **Haldenwanger, Hans-Günther**
**Behaimstrasse 16a**
**D-8070 Ingolstadt(DE)**

(74) Vertreter: **Le Vrang, Klaus**
**c/o AUDI AG, Abteilung I/EQA Postfach 2 20**
**D-8070 Ingolstadt(DE)**

(54) **Rohrförmiges, tordierbares Federelement.**

(57) Die Erfindung betrifft ein rohrförmiges, tordierbares Federelement hoher spezifischer Belastbarkeit, bestehend aus zumindest zwei konzentrisch ineinander angeordneten Rohrkörpern, die aus in einem Winkel zwischen 0 ° und 90 ° verlaufenden Fasern, Drähten, Stäben oder Lamellen gebildet sind, wobei die Wickelrichtung der Rohrkörper gegenläufig ist und der innere Rohrkörper bei Torsionsbelastung auf Expansion und der äußere Rohrkörper auf Kontraktion belastet ist, und die beiden Rohrkörper sich zumindest ab einer definierten Torsionsbelastung aneinander abstützen. Zwischen den Rohrkörpern ist eine isolierende, begrenzt elastische Schicht angeordnet; ferner sind beide Rohrkörper an ihren Enden mit je einem gemeinsamen Krafteinleitungsteil verbunden.

FIG.1

## Rohrförmiges, tordierbares Federelement

Die Erfindung betrifft ein rohrförmiges, tordierbares Federelement.

Tordierbare Federelemente sind beispielsweise im Automobilbau als Drehfederstäbe bei Radaufhängungen oder als Halteelemente für Motorhauben, Kofferraumdeckel ect. bekannt. Die Federelemente bestehen aus Stahl und sind Vollstäbe, die dementsprechend ein hohes Gewicht aufweisen.

Für Antriebswellen oder dergleichen ist es ferner bekannt, diese rohrförmig aus faserverstärktem Kunststoff herzustellen. Dabei werden beispielsweise mit Kunstharz getränkte Fasern (Aramid, Glas ect.) in einen Winkel von z. B. +/- 45 ° zu einem Rohrkörper gewickelt. Derartige Antriebswellen sind leichter als vergleichbare Stahlwellen (Rohre) und zeichnen sich durch eine hohe Drehsteifigkeit aus.

Aufgabe der Erfindung ist es hingegen, ein hochbelastbares, tordierbares Federelement mit geringem Gewicht herzustellen, welches eine hohe Eigendämpfung und gegebenenfalls eine progressive Feder-Kennlinie aufweisen kann. Ferner ist es Aufgabe der Erfindung, geeignete Vorrichtungen zum Herstellen des Federelementes vorzuschlagen.

Die erstgenannte Aufgabe wird mit den kennzeichnenden Merkmalen des Patentanspruches 1 gelöst. Vorteilhafte Ausgestaltungen der Erfindung sind in Patentansprüchen 2 bis 17 entnehmbar. Vorrichtungen zur Herstellung der in den Patentansprüchen 1 bis 17 gekennzeichnenden Federelemente sind in den Patentansprüchen 18 und 19 beschrieben.

Erfindungsgemäß werden zwei ineinander angeordnete Rohrkörper vorgeschlagen, die als zwei hinsichtlich ihrer Belastung eigenständige Körper wirken. Dabei ist der innere Rohrkörper so gewickelt, daß er bei einer vorgegebenen Torsionsbelastung auf Expansion (Druckbelastung der Fasern und Aufweitung) und der äußere Rohrkörper auf Kontraktion (Zugbelastung der Faser und Einschnürung) beansprucht wird, so daß sich die beiden Rohrkörper bei einer vorgegebenen Belastung aneinander abstützen, woraus eine hohe Belastbarkeit resultiert. Zur Erzielung einer progressiven Feder-Kennlinie kann zwischen den Rohrkörpern ein definierter Umfangs-Zwischenraum oder eine begrenzt kompressible Isolierungsschicht vorgesehen sein. Beide Rohrkörper sind an ihren Enden an je ein gemeinsames Krafteinleitungsteil angebunden, über das die von den Fasern, Drähten, Stäben oder Lamellen übertragenen Zug- und Druckspannungen als Drehmomente ein- bzw. abgeleitet werden. Die Isolierungsschicht kann vorteilhaft aus Kautschuk bestehen und somit auch dämpfend wirken.

Die Fasern, Drähte oder Stäbe sind in einer Matrix, bevorzugt aus aushärtbarem Kunstharz, eingebettet, wobei das Federelement letztendlich eine unlösbare Einheit aus den beiden Rohrkörpern mit den stirnseitig abschließenden Krafteinleitungsteilen bilden kann. Bevorzugt ist zwischen den Rohrkörpern eine Dämpfungsschicht vorgesehen, die eine Eigendämpfung und eine progressive Feder-Kennlinie des Federelementes ergibt und die die beiden Rohrkörper miteinander zu einer Baueinheit verbindet. Im übrigen wirkt die gesamte Matrix in hohem Maße dämpfend, mit einen Dämpfungsanteil eines jeden eingebundenen Faser, Draht oder Stabelementes.

Soll das Federelement in beiden Torsionsrichtungen belastbar sein, so ist zumindest ein dritter Rohrkörper zweckmäßig, der z. B. als äußerster Rohrkörper gleichsinnig wie der innerste Rohrkörper gewickelt ist; d. h. daß die Wickelrichtungen z. B. von innen und außen alternieren.

Der Wickelwinkel bzw. die Anordnung der Fasern, Drähte oder Stäbe kann praktisch in Umfangsrichtung (Wickelwinkel nahezu 90°), bevorzugt jedoch zwischen 5° - 85° betragen, wobei zur Kompensation der entgegengesetzt gerichteten Axialspannungen zwischen den Rohrkörpern ein einheitlicher Wickelwinkel zweckmäßig sein kann. Bei unterschiedlichen Werkstoffen oder Schichtdicken der Rohrkörper können auch unterschiedliche Wickelwinkel verwendet sein. Über den Wickelwinkel wird auch eine ausreichende Biegesteifigkeit des Federelementes erzeugt.

Das Federelement kann aus Lamellen aus Federmetall gebildet sein, deren frei abragende Schenkel entsprechend verdrillt sind. Alternativ kann ein einer hohen Belastung ausgesetztes Federelement (z. B. ein Drehstab für Kraftfahrzeug-Federung) als Federmaterial lcp (liquid crystal polymers) bzw. Glas- oder Kohlenstoffasern für den inneren druckbelasteten Rohrkörper und Aramidfasern für den äußeren zugbelasteten Rohrkörper aufweisen.Als isolierende Zwischenschicht und ggf. Matrix kann Kautschuk verwendet sein. Dies ergibt eine rationelle Fertigbarkeit des Federelementes und eine robuste Konstruktion, die hohen Belastungen aussetzbar ist.

In Weiterbildung des erfindungsgemäßen Federelementes werden entsprechend den Patentansprüchen 9 bis 15 bevorzugte Anbindungen des Federelementes an die Krafteinleitungsteile vorgeschlagen, die eine gleichmäßige Spannungsverteilung sicherstellen und hohen Belastungen standhalten. Dabei sind die Krafteinleitungsteile bevorzugt ringförmig und im Querschnitt u-förmig ausgebildet und mit den Endbereichen des Federelementes insgesamt als auch mit den einzelnen Fasern, Drähten, Stäben oder Lamellen formschlüssig verbunden, so daß eine gleichmäßige gezielte Bauteilebelastung unter Vermeidung von örtlich unzulässig hohen Spannungsspitzen erreicht wird.

So können nach Anspruch 10 die Lamellen zu einem einheitlichen Ringwulst verbunden sein, von dem aus sie in +/- Richtung zur Bildung des inneren und äußeren Rohrkörpers ablaufen. Dies hat den Vorteil, daß je Lamelle zug- und druckbelastete Schenkel gebildet sind, woraus ein gegenseitiger homogener Spannungsabbau resultiert.

Eine herstellungstechnisch einfache und montagegünstige Abstützung der über die Fasern übertragenen Druckspannungen kann gemäß Anspruch 11 über Vertiefungen, z. B. sägezahnartige Vertiefungen, in den Krafteinleitungsteilen erfolgen. Die gegengerichteten Zugspannungen können nach den Ansprüchen 12 bis 14 alternativ über Bohrungen oder Verankerungszungen der Krafteinleitungsteile aufgefangen werden. Durch die trompetenförmige Gestaltung der Bohrungen werden Spannungsspitzen im Verankerungsbereich vermieden.

Die Feder-Kennlinie und Dämpfungscharakteristik des Federelementes kann durch die Merkmale des Patentanspruches 15 vorteilhaft beeinflußt werden. Bei insbesondere aus faserverstärktem Kunststoff hergestelltem Federelement ist es durchaus möglich, in die Dämpfungsschicht oder z. B. benachbart den auf druckbelasteten Fasern Kanäle bzw. Kammern vorzusehen, die unter Fluiddruck eine gezielte Deformierung (z. B. Aufweitung oder Einschnürung) der Rohrkörper bewirken und dadurch die Eigenschaften des Federelementes gezielt verändern. Das Fluid kann Druckluft oder eine unter Druck stehende Flüssigkeit sein. Bei einer hohen Eigendämpfung des Federelementes kann das Fluid zusätzlich oder ausschließlich zur Kühlung eingesetzt sein.

Zweckmäßige Vorrichtungen zur Herstellung von Federelementen gemäß der Erfindung sind in den Patentansprüchen 16 bis 18 aufgeführt. Hinsichtlich deren vorteilhaften Eigenschaften und deren Gestaltung wird auf die nachfolgende Beschreibung mehrerer Ausführungsbeispiele verwiesen.

Die zur Erläuterung der Ausführungsbeispiele beigefügte Zeichnung zeigt in

Fig. 1 im Längsschnitt ein schematisch dargestelltes Federelement mit einem inneren und einem äußeren Rohrkörper aus gewickelten Federmetall-Lamellen, einer zwischenliegenden Isolierungsschicht und endseitigen Krafteinleitungsteilen;

Fig. 2 einen vergrößerten Abschnitt des Federelementes nach Fig. 1 ohne Krafteinleitungsteile, in raumbildlicher Darstellung;

Fig. 3 einen halbseitigen Längsschnitt durch das Federelement gemäß den Fig. 1 und 2 mit endseitigen Krafteinleitungsteilen;

Fig. 4 eine Ansicht X aus Fig. 3 der in Umfangsrichtung zu Rohrkörpern verdrillten Lamellen des Federelementes nach den Fig. 1 - 3;

Fig. 5 einen halbseitigen Längsschnitt durch ein weiteres Federelement mit in einer Matrix eingebetteten Drähten und endseitigen Krafteinleitungsteilen,

Fig. 6 Abwicklungen der Zug- und Druck-Drähte des Federelementes nach Fig. 5;

Fig. 7 einen halbseitigen Längsschnitt durch ein Federelement mit Stäben aus synthetischen Fasern in einer Kunstharzmatrix,

Fig. 8 die Einbindung eines Zugstabes des Federelementes nach Fig. 7 in das korrespondierende Krafteinleitungsteil,

Fig. 9 die Abstützung eines Druckstabes am korrespondierenden Krafteinleitungsteil des Federelementes nach Fig. 7;

Fig. 10 eine Vorrichtung zur endlosen Herstellung von Federelementen unter Verwendung eines Stützkernes mit zwei gleichzeitig in Betrieb befindlichen, hintereinander geschalteten Extrudern für die Rohrkörper, mit gegenläufig rotierenden Ringspaltdüsen;

Fig. 11 im Längsschnitt in schematischer Darstellung einen Extruder nach Fig. 10 mit Ringspaltverteiler und einen Rotor mit Ringspaltdüse;

Fig. 12 eine Vorrichtung zur Herstellung endlich langer Federelemente mit Extrudern und einer eine alternierende Rotation der Rohrkörper erzeugenden Abzugsvorrichtung;

Fig. 13 eine Vorrichtung zum Hintereinander-Wickeln der aus bandförmigen Fasergelegen gebildeten Rohrkörper eines Federelementes mit schwenkbar angeordneten Bandwickelstationen und

Fig. 14 einen Abschnitt eines bandförmigen Fasergeleges mit einer Trägerfolie als Isolierungsschicht.

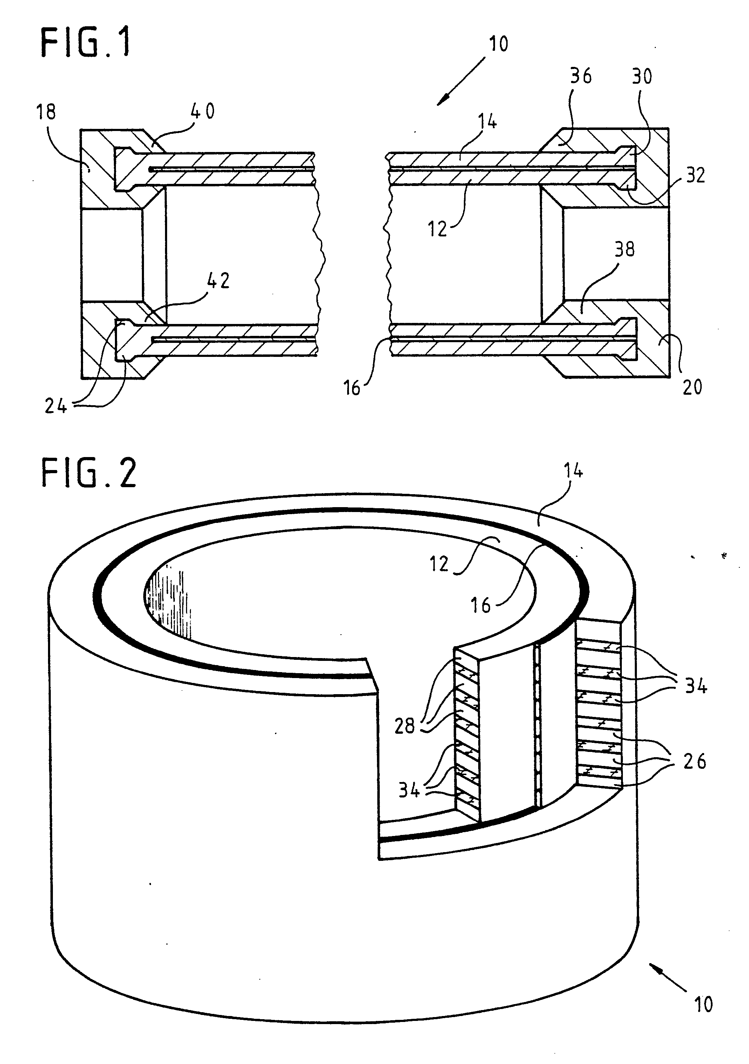

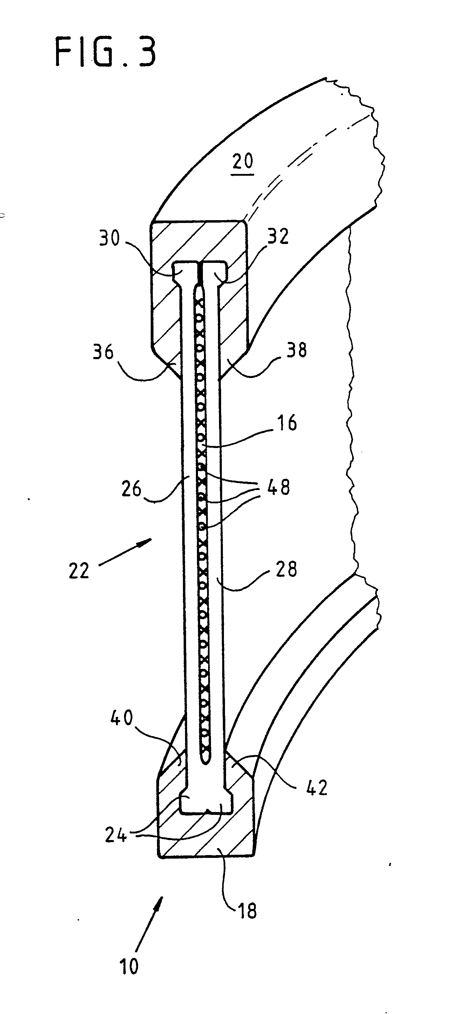

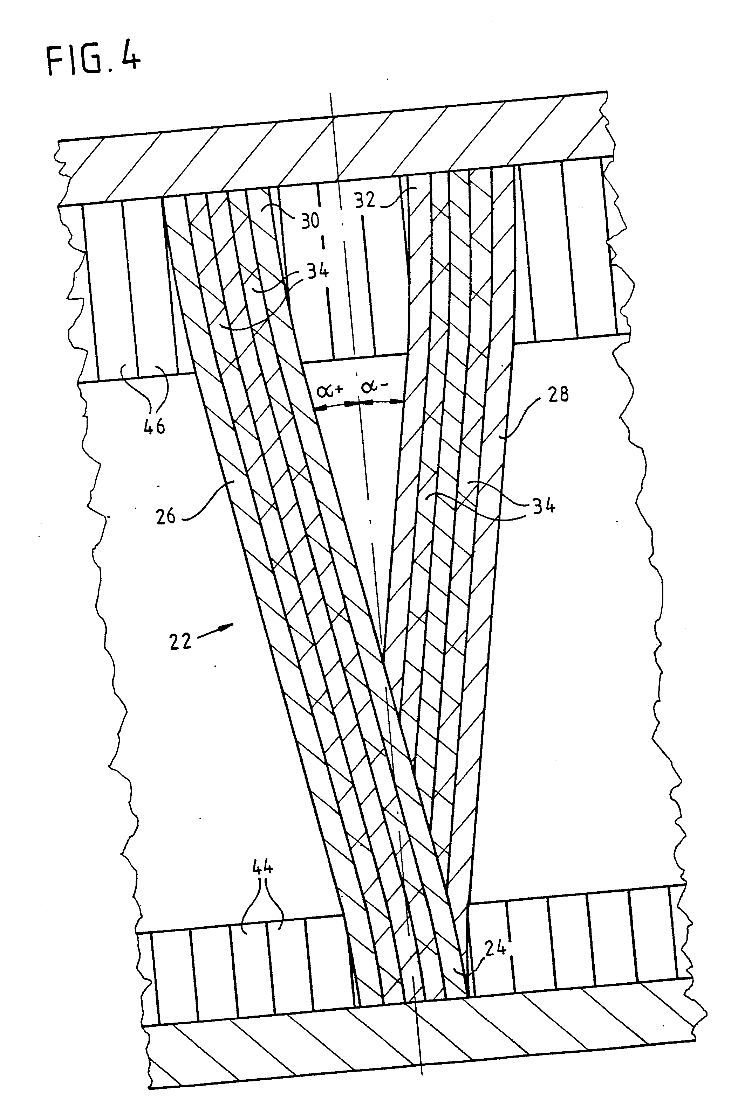

Die Fig. 1 bis 4 zeigen ein tordierbares Federelement 10, im wesentlichen bestehend aus zwei ineinander angeordneten Rohrkörpern 12,14, die durch eine dämpfende Isolierungsschicht 16 aus Kautschuk unterteilt sind. An den beiden Enden der Rohrkörper 12,14 sind ringförmige, im Querschnitt u-förmige Krafteinleitungsteile 18,20 vorgesehen. Die aus Metall hergestellten Krafteinleitungsteile sind in nicht dargestellter Weise über bekannte Befestigungsmittel mit den bestimmungsgemäßen Anschlußelementen verbunden, die z. B. Radaufhängungsteile und der Aufbau eines Kraftfahrzeuges im Falle einer Drehstabfeder sein können.

Die beiden Rohrkörper 12,14 bestehen aus blattförmigen Lamellen 22 aus Federmetall (vergl. Fig. 2 - 4), die an ihrem einen Ende wulstförmige Erweiterungen 24 mit daran angeformten, bandförmigen Schenkeln 26,28 aufweisen. Die konzentrisch zueinander verlaufenden Schenkel 26,28 sind mit endseitigen, ebenfalls wulstförmigen Erweiterungen 30,32 versehen. Die Lamellen 22 sind über den Umfang des Federelementes 10 mit jeweils einer Zwischenschicht 34 aus Kautschuk angeordnet. Die Schenkel 26,28 verlaufen zur Bildung der beiden Rohrkörper 12,14 in einem Winkel +/-10° verdrillt vom Krafteinleitungsteil 18 zum Krafteinleitungsteil 20. Dort bilden die nunmehr umfangsmäßig versetzt zueinander liegenden Erweiterungen 30,32 der Lamellen 22 eine weitere ringförmige Wulst.

Die wulstförmigen Erweiterungen 24,30,32 der Lamellen 22 bzw. der Rohrkörper 12,14 werden von den ringförmigen Schenkeln 36,38,40,42 der Krafteinleitungsteile 18,20 formschlüssig umfaßt. Zudem sind diese Schenkel an ihren inneren Umfangsflächen mit achsparallel verlaufenden Nuten 44,46 versehen, in denen die Lamellen 22 zur Herstellung eines Formschlusses in Umfangsrichtung verankert sind.

Ferner ist zwischen den Schenkeln 26,28 der Lamellen 22 die Isolierungsschicht 16 eingebracht. Die Schichten 16 und 34 ergeben eine strukturelle Matrix aus Kautschuk, die eine hohe Dämpfung des tordierbaren Federelementes 10 sicherstellen und Reibung zwischen den Lamellen ausschalten. In der Isolierungsschicht 16 sind zur Kühlung des Federelementes 10 durch elastische Rohre gebildete Kanäle 48 vorgesehen, die von einem kühlenden Fluid, insbesondere einer Kühlflüssigkeit, durchströmt werden. Die Kanäle 48 sind in nicht dargestellter Weise an ein Umlauf-Kühlsystem angeschlossen. Gegebenenfalls kann jedoch der Transport des Kühlmediums auch durch die Federbewegungen des Federelementes 10 bewirkt werden.

Beim Tordieren des Federelementes 10 werden die wie Bänder wirkenden Schenkel 26,28 der Rohrkörper 12,14 durch die +/- 10° Verdrillung auf Kontraktion und Expansion (Zug- bzw. Druck) belastet. Das Federelement 10 ist dabei so ausgebildet, daß bei gegebener Torsionsbeanspruchung der innere Rohrkörper 12 auf Expansion und der äußere Rohrkörper 14 auf Kontraktion belastet wird. Dadurch stützen sich die beiden Rohrkörper 12,14 aneinander ab und ermöglichen ein hohes Torsionsmoment bei gleichmäßiger Spannungsbelastung und günstigem Gewicht.

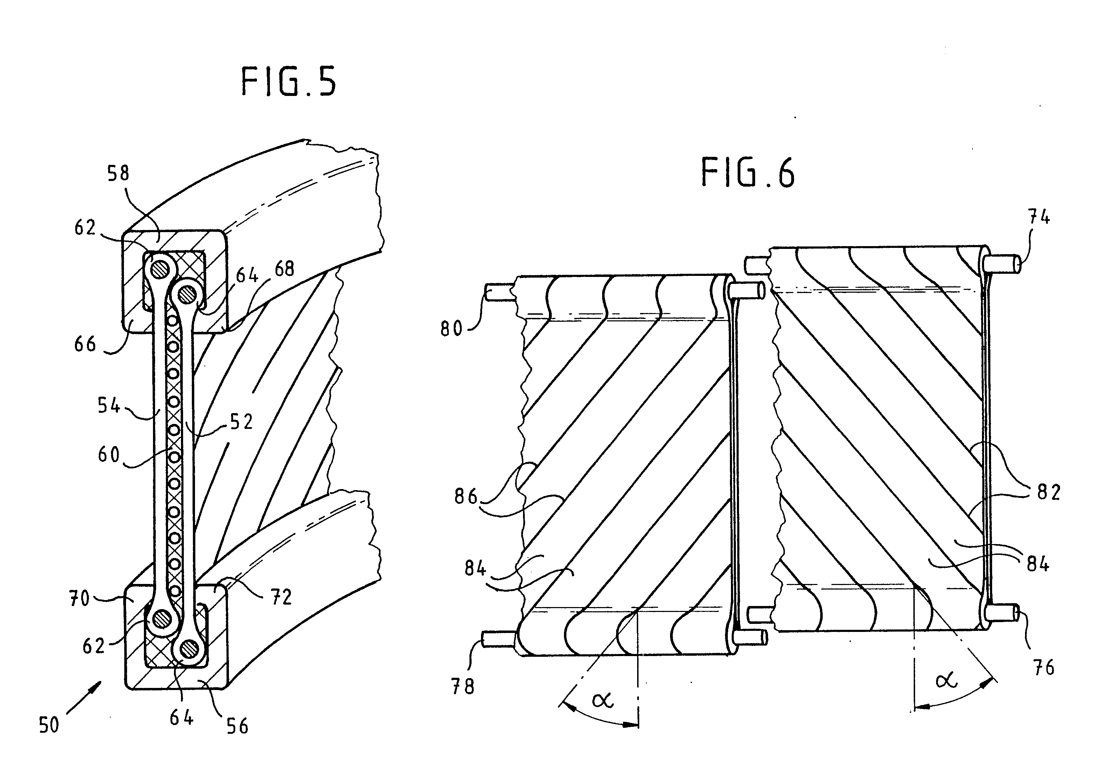

Das in den Fig. 5 bis 7 teilweise dargestellte Federelement 50 ist im wesentlichen so aufgebaut wie das vorbeschriebene Federelement 10, so daß nur auf die baulichen und werkstofftechnischen Unterschiede eingegangen wird.

Das Federelement 50 weist wiederum einen inneren und einen äußeren Rohrkörper 52,54 auf, die in Krafteinleitungsteilen 56,58 verankert sind und zwischen denen eine Isolierungsschicht 60 vorgesehen ist. Die Rohrkörper 52,54 sind an deren Enden mit Ringwülsten 62,64 versehen, die von den Schenkeln 66,68,70,72 der ringförmigen Krafteinleitungsteile 56,58 formschlüssig umfaßt sind.

Ein jeder Rohrkörper ist aus einem Fasergelege gebildet, welches sich aus starken Umfangsdrähten 74,76,78,80 (Fig. 6) aus Stahl und über diese umlaufend über einen Winkel von +/- 80 ° gewickelten synthetischen Fasern 82,86 aus Kohlenstoff (für den inneren Rohrkörper 52) bzw. aus Aramid (äußerer Rohrkörper 54) zusammensetzt. Die gesamten Fasergelege sind in eine Kunstharzmatrix 84 eingebettet, die auch die Isolierungsschicht 60 bildet.

Ein jedes dieser Fasergelege ist zu einem inneren bzw. äußeren Rohrkörper 52,54 gewickelt; nach dem Anbringen der Krafteinleitungsteile 56,58 wird die Kunstharzmatrix 84 ausgehärtet. Die zugdruckübertragenden Fasern 82,86 der Rohrkörper 54,56 sind an den Umfangsdrähten 74,76,78,80 abgestützt bzw. verankert. Die Funktion des Federelementes 50 ist analog der des Federelementes 10.

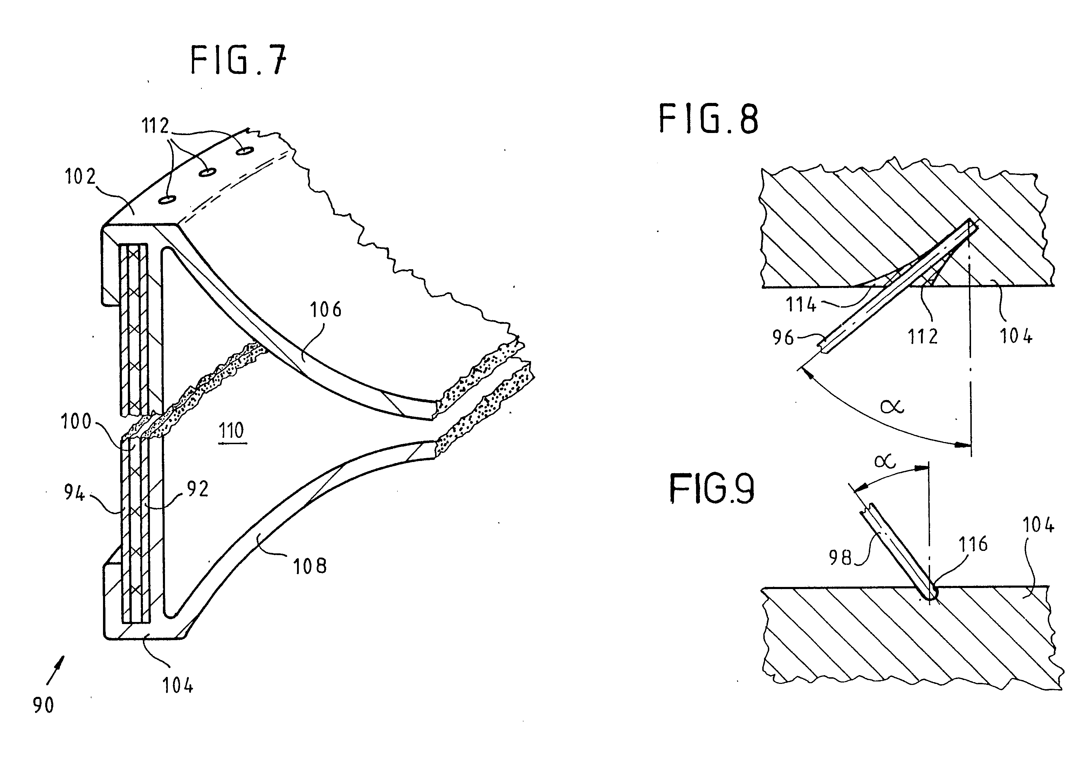

Die Fig. 7 zeigt ein weiteres Federelement 90, dessen Aufbau und Funktion mit den vorbeschriebenen Federelementen 10 bzw. 50 übereinstimmt.

Dessen innerer und äußerer Rohrkörper 92,94 sind aus Drähten 96,98 aus Stahl gebildet, die in eine Matrix aus chemisch angekoppeltem Thermoplast eingebettet sind. Auch die zwischen den Rohrkörpern vorgesehene Isolierungsschicht 100 besteht aus diesem thermoplastischen Material. Die Drähte 96,98 sind in einem Winkel von +/- 10 ° zueinander angeordnet.

Die ringförmigen Krafteinleitungsteile 102,104 sind schüsselförmig mit Böden 106,108 versehen, die einen im wesentlichen v-förmigen Ringraum zwischen sich und dem inneren Rohrkörper 92 einschließen. Dieser Ringraum bildet eine Kammer 110, die über einen nicht dargestellten Anschluß mit hydraulischem Druck beaufschlagbar ist. Die Drähte 96 (Fig. 8) des äußeren Rohrkörpers 94 sind in Bohrungen 112 der Krafteinleitungsteile 102,104 verankert (z. B. verschweißt oder gestaucht). Um Spannungsspitzen im Befestigungsbereich zu vermeiden, sind die Bohrungen im Zugbelastungsrichtung trompetenförmig bzw. hyperbolisch erweitert, wobei diese Erweiterungen mit einem dauerelastischen Klebstoff 114 ausgefüllt sind.

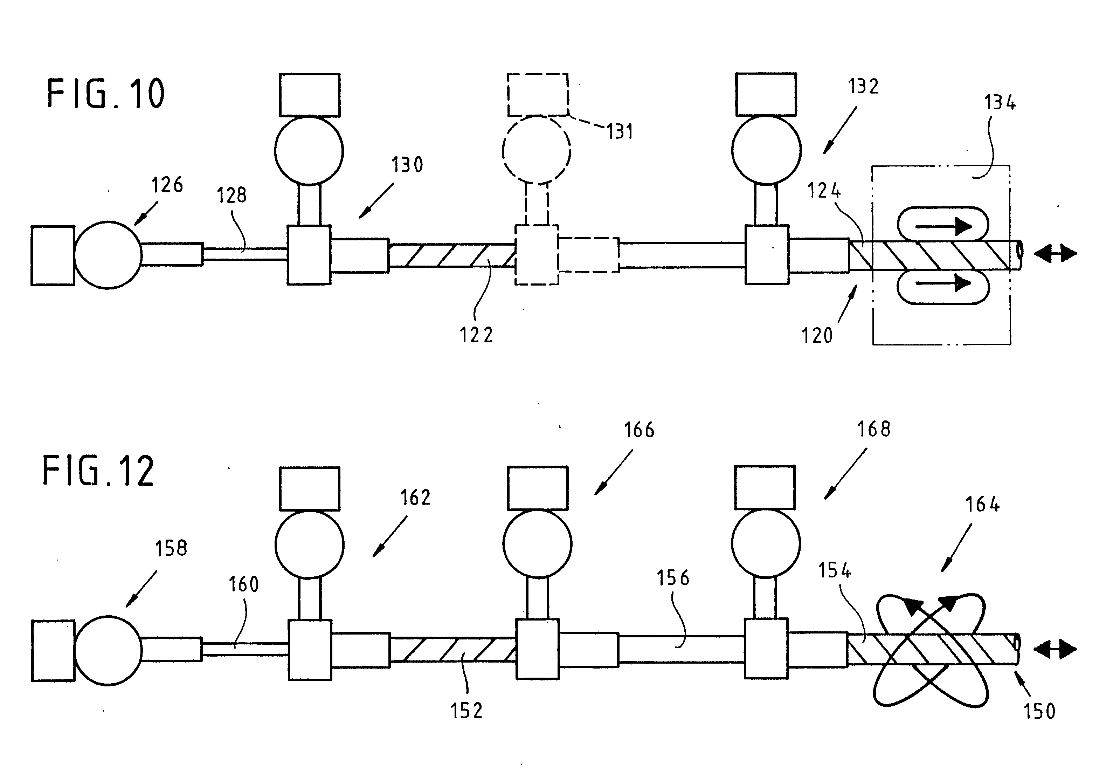

Demgegenüber sind die druckbelasteten Drähte 98 (Fig. 9) des inneren Rohrkörpers 92 in sägezahnartigen Vertiefungen 116 der Krafteinleitungsteile 102,104 abgestützt, wobei je Draht eine Vertiefung 116 radial innerhalb der Bohrungen 112 um den Umfang der Krafteinleitungsteile vorgesehen ist.

Bei einer Torsionsbelastung des Federelementes 90 in der definierten Drehrichtung wird der äußere Rohrkörper 94 auf Kontraktion und der innere Rohrkörper 92 auf Expansion belastet, so daß sich die Rohrkörper über die Isolierungsschicht 100 wiederum aneinander abstützen. Die Federrate des Federelementes 90 kann verändert bzw. noch erhöht werden, indem zusätzlich die Kammer 110 druckbeaufschlagt wird. Dabei werden nämlich insbesondere die auf Zug belasteten Drähte 96 radial und axial einer zusätzlichen Spannung ausgesetzt.

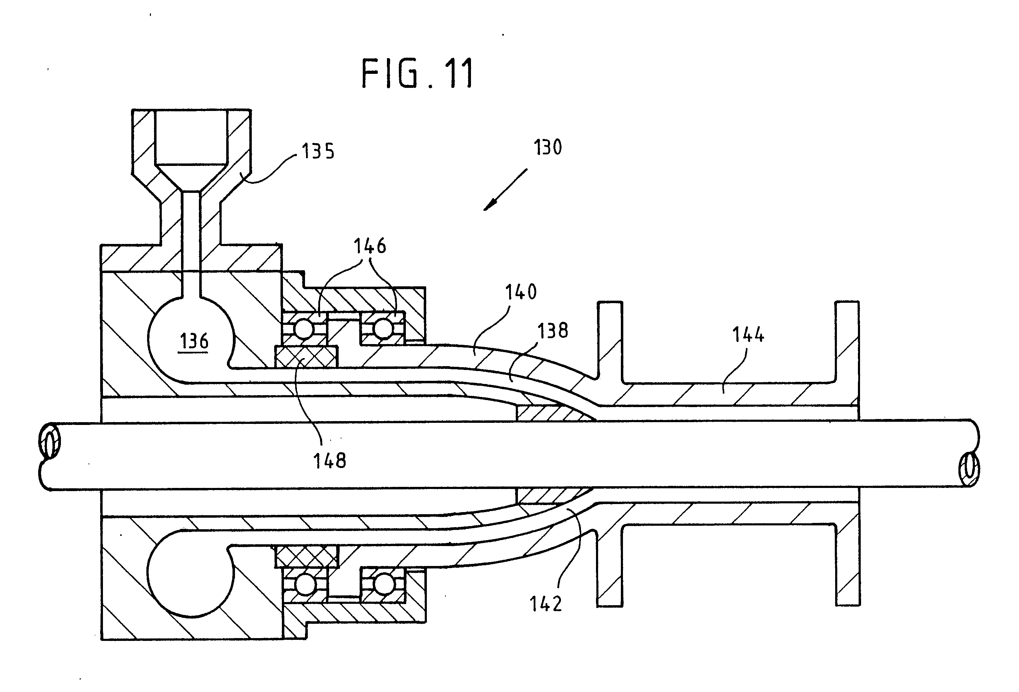

Die im folgenden anhand der Fig. 10 und 11 beschriebenen Vorrichtung dient zum Herstellen von Federelementen 120 mit einem inneren und einem äußeren Rohrkörper 122,124, an die in einem späteren Arbeitsgang noch die Krafteinleitungsteile angebaut werden. Die Rohrkörper 122,124 sind aus Glasfasern (Langfasern) mit einem Wickelwinkel von +/- 10° in einer Kunstharzmatrix hergestellt.

Zur Fertigung endlos langer Federelemente (die anschließend nach Bedarf abgelängt werden) ist ein erster Extruder 126 mit nicht dargestellter Kalibriervorrichtung vorgesehen, der ein Stützrohr 128 definierten Durchmessers schafft. Das Stützrohr 128 läuft in einen zweiten Extruder 130 ein, indem der innere Rohrkörper 122 auf das Stützrohr 128 gewickelt wird. In einem nachgeschalteten dritten Extruder 132 wird der äußere Rohrkörper 124 erzeugt, der Transport des so geschaffenene Federelementes 120 erfolgt mittels einer schematisch angedeuteten Abzugsvorrichtung 134. Obwohl sich durch die Verwendung der Kunstharz getränkten Glasfasern eine Isolierungsschicht (wie vorbeschrieben) auch automatisch bildet, kann gegebenenfalls zwischen den Extrudern 130, 132 ein weiterer Extruder 131 (gestrichelt angedeutet) angeordnet sein, mittels dem eine separate Isolierungsschicht aufgebracht wird.

Der Aufbau der Extruder 130,132 ist in Fig. 11 näher dargestellt. Dabei ist mit 135 der Extruder herkömmlicher Bauart bezeichnet, der die Matrixmasse mit den Glasfasern in einen Stator 136 mit Ringverteiler drückt. Der Ringverteiler geht in eine Ringspaltdüse 138 über, die außen von einem Rotor 140 mit in die Ringspaltdüse einragenden Längsnuten 142 begrenzt ist. An den Rotor 140 ist eine Kalibriervorrichtung 144 angeschlossen. Der Rotor 140 ist über ein Wälzlager 146 auf dem Stator 136 drehbar gelagert; eine Ringdichtung 148 dichtet die Ringspaltdüse 138 zur Wälzlagerung 146 ab. Durch die Drehbewegung des Rotors 140 in Verbindung mit der Axialbewegung durch die Abzugsvorrichtung 134 wird ein Wickelwinkel von +/- 10° der Rohrkörper 122,124 erreicht (entgegengesetzte Drehrichtungen der Rotoren 140 in den Extrudern 130 bzw. 132!).

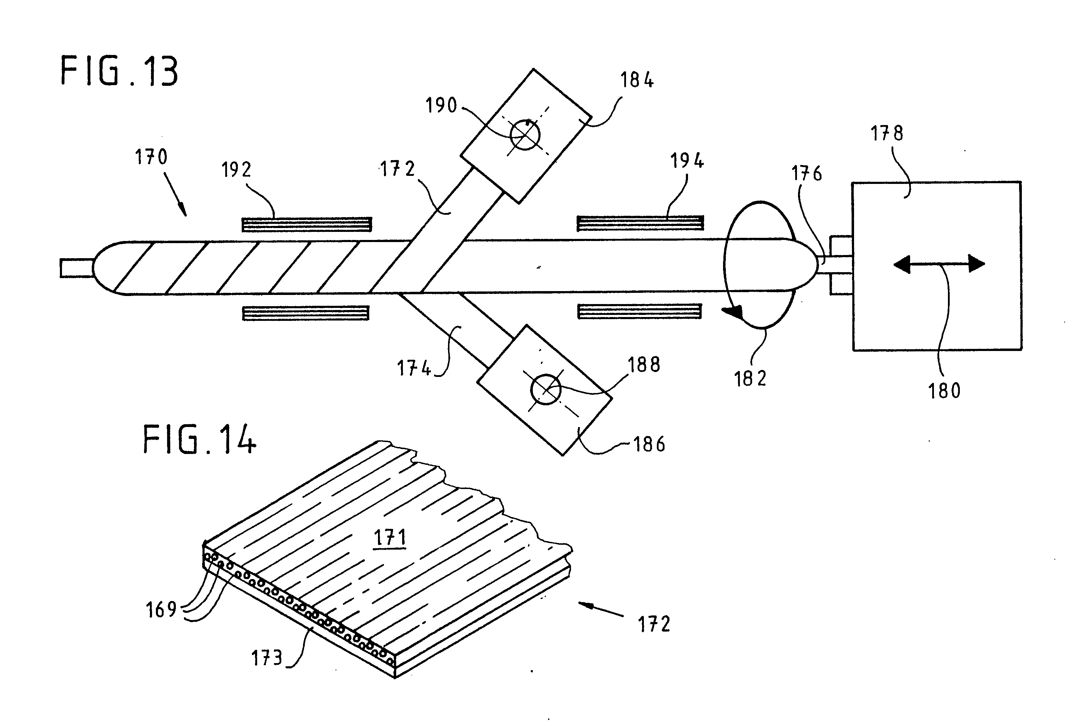

Die Fig. 12 zeigt eine Vorrichtung zum Herstellen endlich langer Federelemente 150 aus selbstverstärkenden Polymeren, insbesondere aus lcp (liquid crystal polymers) mit einem inneren und einem äußeren Rohrkörper 152,154 mit einem Wickelwinkel von +/- 80° und einer Isolierungsschicht 156. Die Krafteinleitungsteile werden in einem weiteren nicht dargestellten Arbeitsgang angebaut.

Wiederum ist ein erster Extruder 158 für einen Stützkern 160 vorgesehen. Über diesen Stützkern wird mittels eines zweiten Extruders 162 mit statischer Ringspaltdüse und Kalibriervorrichtung der innere Rohrkörper 152 aufgebracht, wobei der Wickelwinkel mittels einer schematisch angedeuteten Abzugsvorrichtung 164 aufgeprägt wird, die der axialen Bewegung eine rotatorische Bewegung in einer ersten Drehrichtung überlagert. In einem dritten Extruder 166 wird die Isolierungsschicht 156 erzeugt.

Ein vierter Extruder 168 schließlich vollzieht die Herstellung des äußeren Rohrkörpers 154, wobei beim Einlaufen des inneren Rohrkörpers 152 mit z. B. 80° Wicklung und mit aufextrudierter Isolierungsschicht 156 in den vierten Extruder 168 die Abzugsvorrichtung die Rotationsrichtung umkehrt, so daß vom vierten Extruder 168 der äußere Rohrkörper 154 mit - 80° Wickelwinkel und gleichzeitig vom zweiten Extruder 162 ein neuer innerer Rohrkörper mit - 80° Wickelwinkel begonnen wird. Sobald der neue innere Rohrkörper den vierten Extruder 168 erreicht, wird die Rotationsrichtung der Abzugsvorrichtung wiederum umgekehrt. Somit erzeugt die Vorrichtung kontinuierlich Federelemente 150 mit in unterschiedlichen Wickelrichtungen gewickelten inneren und äußeren Rohrkörpern 152, 154.

Es versteht sich, daß die beiden Extruder 162,168 entsprechend der Länge der herzustellenden Federelemente 150 voneinander beabstandet sein müssen.

Nach der Montage der Krafteinleitungsteile wird das Federelement 150 ausgehärtet bzw. bei Verwendung von Kautschuk als Matrixmaterial ausvulkanisiert.

Die Fig. 13 zeigt eine Vorrichtung zum Herstellen eines endlich langen Federelementes 170 mit einem inneren und einem äußeren Rohrkörper, die aus bandförmigen Fasergelegen 172, 174 (vgl. Fig. 14) gewickelt werden. Die Fasergelege 172,174 bestehen aus miteinander verwirkten, unidirektional gerichteten Aramid-Langfasern 169, die in einer Kunstharzmatrix 171 eingebunden sind. Die Kunstharzmatrix 171 ist auf einer zugleich als Isolierungsschicht dienenden Trägerfolie 173 aufgebracht.

Zum Wickeln der Rohrkörper ist ein Stützkern 176 in einer Antriebsein richtung 178 aufgenommen und wird von dieser axial und rotatorisch gemäß den Pfeilen 180,182 angetrieben. Der Stützkern 176 kann ggf. auch Elemente der Krafteinleitung aufrechnen.

Beiderseits des Stützkernes 176 sind zwei Bandwickelstationen 184,186 angeordnet, die um je eine Achse 188,190 schwenkbar sind, und zwar beispielsweise von der gezeichneten Position in eine spiegelbildliche Position, in der ein entgegengesetzter Wickelwinkel herstellbar ist. Mit dieser Vorrichtung können die beiden Rohrkörper mit einem beliebigen Wickelwinkel zwischen +/- 5° - 85° gewickelt werden.

Dabei wird zunächst der innere Rohrkörper durch entsprechendes Aufwickeln der Fasergelege 172,174 hergestellt, wobei der Stützkern oder alternativ dazu die Bandwickelstationen auf der Zeichnung von links nach rechts verfahren werden. Anschließend werden die Bandwickelstationen geschwenkt und der Stützkern 176 in entgegengesetzer Richtung verfahren, wobei dann der äußere Rohrkörper gebildet wird.

Gegebenenfalls kann benachbart den Bandwickelstationen 184,186 bereits eine Heizvorrichtung 192, 194 vorgesehen sein, mit der das Federelement 170 anschließend ausgehärtet bzw. ausvulkanisiert wird. Bei Verwendung von Reaktionsharzen mit thermoplastischer B-Phase oder von vulkanisierbaren Kautschuken als Matrixmaterial erfolgt die Aushärtung zweckmäßigerweise nach der Komplettierung bzw. nach der Montage der nicht dargestellten Krafteinleitungsteile.

## Ansprüche

1. Rohrförmiges, tordierbares Federelement, **gekennzeichnet durch:**

    **a)** zumindest zwei ineinander angeordnete Rohrkörper (12,14;52,54;92,94) die aus in einem Winkel α zwischen 0 ° und 90 ° verlaufenden Fasern, Drähten, Stäben oder Lamellen gebildet sind,

    **b)** die Wickelrichtung der Rohrkörper ist gegenläufig, wobei der innere Rohrkörper bei Torsionsbelastung auf Expansion (Druck) und der äußere Rohrkörper auf Kontraktion (Zug) belastet ist,

    **c)** die beiden Rohrkörper stützen sich zumindest ab einer definierten Torsionsbelastung aneinander ab,

    **d)** zumindest zwischen den Rohrkörpern ist eine isolierende, begrenzt elastische Schicht (16;60;100) angeordnet, und

    **e)** beide Rohrkörper sind an ihren Enden mit je einem gemeinsamen Krafteinleitungsteil (18,20;56,58;102,104) verbunden.

2. Federelement nach Anspruch 1, **dadurch gekennzeichnet,** daß die Rohrkörper eine dämpfende Matrix aufweisen, die auch die isolierende Schicht bildet.

3. Federelement nach Anspruch 2, **dadurch gekennzeichnet,** daß als Matrixmaterial ein thermoplastischer oder duroplastischer Kunststoff, verwendet ist.

4. Federelement nach Anspruch 1, **dadurch gekennzeichnet,** daß die isolierende Zwischenschicht (16) und/oder die Matrix (34) aus Kautschuk besteht.

5. Federelement nach einem oder mehreren der Ansprüche 1 - 4, **dadurch gekennzeichnet,** daß die Rohrkörper (12,14) mit aneinandergereihten, verdrillten Lamellen (22) aus Federmetall gebildet sind.

6. Federelement nach einem oder mehreren der vorhergehenden Ansprüche, **dadurch gekennzeichnet,** daß die Rohrkörper (52,54) durch Faserwicklungen aus synthetischen Fasern (82,86) hergestellt sind.

7. Federelement nach einem oder mehreren der Ansprüche 1 - 6; **dadurch gekennzeichnet,** daß die Rohrkörper durch orientierte Thermoplaste, insbesondere faserverstärkte Thermoplaste oder liquid crystal polymers hergestellt sind.

8. Federelement nach Anspruch 6, **dadurch gekennzeichnet,** daß als Wickelfasern für den inneren, druckbelasteten Rohrkörper (52) Kohlenstoffasern (82) und für den äußeren, zugbelasteten Rohrkörper (54) Glas- oder hochorientierte organische Fasern, insbesondere Aramidfasern (86), verwendet sind.

9. Federelement nach den Ansprüchen 1 bis 8, **gekennzeichnet durch** ringförmige Krafteinleitungsteile (18,20;56,58) die beiden Rohrkörper an deren Endbereichen innen und außen umgreifen und formschlüssig mit den druck- und zugübertragenden Elementen (Fasern, Drähten, ect.) verbunden sind.

10. Federelement nach Anspruch 9, **dadurch gekennzeichnet,** daß die Fasern oder Drähte bzw. Lamellen an den Rohrkörper-Endbereichen in ringförmige, radial auskragende Wülste (24,30,32;62,64) einlaufen, die von den Krafteinleitungsteilen formschlüssig umfaßt sind.

11. Federelement nach einen oder mehreren der vorhergehenden Ansprüche, **dadurch gekennzeichnet,** daß die Lamellen (22) beider Rohrkörper (12,14) im einem Krafteinleitungsteil (18) zu einem einheitlichen Ringwulst (24) verbunden sind und gegenläufig verdrillt in das andere Krafteinleitungsteil (20) einlaufen.

12. Federelement nach einen oder mehreren der vorhergehenden Ansprüche, **dadurch gekennzeichnet,** daß in den ringförmigen Krafteinleitungsteilen Vertiefungen (44;116) zur Abstützung der Fasern, Drähte oder Lamellen vorgesehen sind.

13. Federelement nach einen oder mehreren der vorhergehenden Ansprüche, **dadurch gekennzeichnet,** daß in den Krafteinleitungsteilen Mittel (Drähte 74,76,78,80; Bohrungen 112) zum Verankern der auf Kontraktion (Zug) belasteten Fasern oder Drähte vorgesehen sind.

14. Federelement nach Anspruch 13, **dadurch gekennzeichnet,** daß die auf Kontraktion belasteten Fasern oder Drähte schlaufenförmig um an den Krafteinleitungsteilen (56,58) angeordnete Verankerungen herumgeführt sind.

15. Federelement nach Anspruch 13, **dadurch gekennzeichnet,** daß die auf Konstraktion belasteten Fasern oder Drähte in Bohrungen (112) der Krafteinleitungsteile verankert sind, wobei die Bohrungen sich in Zugbelastungsrichtung trompetenförmig erweitern.

16. Federelement nach einem oder mehreren der vorhergehenden Ansprüche, **dadurch gekennzeichnet,** daß an den Rohrkörpern ausgebildete Kammern (110) oder in der Isolierungsschicht (16) vorgesehene Kanäle (48) mit einem kühlenden und/oder unter Überdruck stehendem Fluid beaufschlagbar sind.

17. Federelement nach einem oder mehreren der vorhergehenden Ansprüche, **dadurch gekennzeichnet,** daß die Rohrkörper aus bandförmigen Fasergelegen (172,174) gewickelt sind, wobei die Fasergelege aus einer Trägerfolie (173) als Isolierschicht und einer Kunstharzmatrix (171) mit gerichteten Fasern bestehen.

18. Vorrichtung zum kontinuierlichen Herstellen eines Federelementes aus Kunststoff nach einem oder mehreren der vorhergehenden Ansprüche, **gekennzeichnet durch:**

a) einen ersten Extruder (126) mit Kalibriervorrichtung für einen rohrförmigen Stützkern;

b) einen zweiten Extruder (130) mit Ringspaltverteiler (136) und einen in einer ersten Wickelrichtung drehender Rotor (140) mit Ringspaltdüse (138) und angeflanschter, mitrotierender Kalibriervorrichtung (144);

c) im Abstand dazu einen dritten Extruder (132) mit Ringspaltverteiler (136) und einen in der Gegen-Wickelrichtung drehenden Rotor (140) mit Ringspaltdüse (138) und mitrotierender Kalibriervorrichtung (144), sowie

d) eine das Federelement (120) axial transportierende Abzugsvorrichtung (134) und ggf.

e) einen zwischen den Extrudern (130,132) angeordneten weiteren Ringspaltextruder zum Erzeugen der Isolierschicht.

19. Vorrichtung zur Herstellung endlich langer Federelemente aus Kunststoff nach einem oder mehreren der Ansprüche 1 bis 16, **gekennzeichnet durch:**

a) einen ersten Extruder (158) mit Kalibriervorrichtung für einen Stützkern (160);

b) einen zweiten Extruder (162) mit starrer Ringspaltdüse und Kalibriervorrichtung;

c) einen dritter Extruder (166) mit Kalibriervorrichtung für eine Isolierungsschicht (156);

d) einen vierten Extruder (168) mit starrer Ringspaltdüse und Kalibriervorrichtung;

e) eine Abzugsvorrichtung (164), die zusätzlich beim Durchlaufen des herzustellenden Federelementes (150) durch den zweiten Extruder (162) dieses in der einen Drehrichtung und beim Durchlaufen des vierten Extruders (168) in der anderen Drehrichtung antreibt.

FIG.1

IP 2434

FIG.2

FIG.3

IP 2434

FIG.4

IP 2434

EP 0 351 723 A2

# FIG.5

# FIG.6

## FIG.7

112

102

106

100

110

94    92

108

104

90

EP 0 351 723 A2

## FIG.8

114

96    112    104

α

## FIG.9

α

98    116    104

FIG.10

126  128  130  131  132  134  124  120

EP 0 351 723 A2

FIG.12

166  168  162  158  160  156  154  164  152  150

## FIG.11

EP 0 351 723 A2

IP 2434

FIG.13

FIG.14